# FASCICULE DE BREVET EUROPEEN

(11) **EP 1 088 791 B1**
(45) Date de publication et mention de la délivrance du brevet: **26.11.2003**
(21) Numéro de dépôt: 00402598.7
(22) Date de dépôt: 20.09.2000
(51) Int. Cl.: C01B 39/48, B01J 20/18, B01J 29/04, C10G 45/64

(54) **Procédé de preparation de zeolithes de type structural MTT utilisant des precurseurs specifiques du structurant**
Verfahren zur Herstellung von Zeolith des MTT-Typs mittels spezifischen Vorläufern des Strukturbildners
Process for the preparation of MTT-type zeolites using specific structuring agent precursors

(30) Priorité: 29.09.1999 FR 9912268
(43) Date de publication de la demande: 04.04.2001
(73) Titulaire: Institut Français du Pétrole, 92852 Rueil-Malmaison Cedex (FR)
(72) Inventeur: Rouleau, Loic, 69690 Charly (FR); Kolenda, Frédéric, 69630 Chaponost (FR); Benazzi, Eric, 78400 Chatou (FR)

(56) Documents cités:
- EP-A- 0 042 226
- EP-A- 0 125 078
- EP-A- 0 214 371
- GB-A- 2 202 838

## Description

La présente invention concerne un nouveau procédé de préparation des zéolithes de type structural MTT. Par exemple, ce procédé s'applique plus particulièrement à la synthèse de la zéolithe ZSM-23. La zéolithe ZSM-23 a généralement la formule suivante sous forme anhydre 0-20 R₂O : 0-10 T₂O₃ : 100 XO₂ où R représente un cation monovalent ou 1/n d'un cation de valence n, T représente au moins un élément choisi parmi l'aluminium, le fer, le gallium, le bore, le titane, le vanadium, le zirconium, le molybdène, l'arsenic, l'antimoine, le chrome et le manganèse, X représente le silicium et/ou le germanium.

Les zéolithes de type structural MTT telles que la zéolithe ZSM-23 sont généralement synthétisées par mélange en milieu aqueux d'au moins une source de silice et/ou de germanium et d'au moins une source d'au moins un élément choisi parmi l'aluminium, le fer, le gallium, le bore, le titane, le vanadium, le zirconium, le molybdène, l'arsenic, l'antimoine, le chrome et le manganèse en présence d'au moins un structurant organique tels que les composés de diammonium quaternaire. Le mélange est généralement maintenu à une certaine température jusqu'à la cristallisation de la zéolithe.

### Art antérieur

La zéolithe ZSM-23 de type structural MTT, déjà décrite dans l'art antérieur, présente un réseau microporeux monodimensionnel, dont le diamètre des pores est de 4,5 × 5,2 Å (1 Å = 1 Angstrôm = 1.10⁻¹⁰ m) (« Atlas of Zeolites Structure types », W.M. Meier et D.H. Olson, 4^{ème} Edition, 1996). D'autre part, A.C. Rohmann *et al* (Zeolites, 5, 352, 1985), J.L. Schlenker *et al* (private communication, 1992) et B. Marler *et al* (J. Appl. Cryst. 26; 636, 1993) ont enseigné que le réseau cristallin était de symétrie orthorombique (Pmn2₁, a=21,5 Å, b=11,1 Å, c=5,0 Å) possédant des canaux parallèles à l'axe c, délimités par des cycles à 10 tétraèdres. Le mode de synthèse et les caractéristiques physico-chimiques de la zéolithe ZSM-23 ont été décrits dans divers brevets qui différent par la nature du structurant organique utilisé. La synthèse de cette zéolithe peut être accomplie avec la pyrrolidine (US4076842), la diisopropanolamine (GB2190910), les composés de diammonium quaternaire tels que le bromure d'heptaméthonium (US4490342), le bromure d'octaméthonium (GB2202838), le bromure de dodécaméthonium (US5405596), les composés de triammonium quaternaire (US 5332566). Le mode de synthèse comprend le mélange d'un oxyde, généralement de silicium, et d'un oxyde, généralement d'aluminium, en présence du structurant organique.

D'autres zéolithes présentent la structure MTT et diffèrent de la zéolithe ZSM-23 par le mode de préparation, en particulier le structurant organique. Il s'agit de la zéolithe EU-13 (EP108486) réalisée avec un sel d'ammonium ou de phosphonium quaternaire méthylée, de la zéolithe ISI-4 (EP 102497) réalisée avec l'éthylène glycol ou une monoéthanolamine, de la zéolithe SSZ-32 (US4483835) réalisée avec les dérivés imidazole ou la zéolithe KZ-1 réalisée avec diverses amines (L.M. Parker et al, Zeolites, 3,8, 1988).

### Résumé de l'invention

La présente invention concerne un nouveau procédé de préparation d'un matériau zéolithique de type structural MTT en présence d'au moins deux précurseurs d'un dérivé alkylé de polyméthylène α-ω diammonium jouant le rôle de structurant choisis parmi les monoamines d'une part et parmi les dihalogènures d'alcane et les alcanediols d'autre part.

### Intérêt de l'invention

Le procédé selon l'invention permet de réduire le temps de cristallisation de la zéolithe après formation du mélange, ce qui procure un gain de coût. De plus, l'utilisation de précurseurs du structurant selon l'invention permet d'accroître la sécurité lors de la synthèse de la zéolithe, lesdits précurseurs étant moins dangereux que le structurant lui-même, et permet également de réduire le coût des réactifs, lesdits précurseurs étant moins onéreux que le structurant lui-même ou que les précurseurs de l'art antérieur.

Ainsi la demanderesse a découvert de manière surprenante que la synthèse d'une zéolithe caractérisée par l'utilisation de précurseurs spécifiques du structurant permettait notamment d'obtenir les avantages cités ci-dessus, c'est-à-dire un gain de temps, de sécurité et de coût des réactifs.

### Description de l'invention

L'invention concerne un procédé de synthèse d'un matériau zéolithique de type structural MTT comprenant le mélange en milieu aqueux d'au moins une source d'au moins un élément choisi parmi le silicium et le germanium et d'au moins une source d'au moins un élément T choisi parmi l'aluminium, le fer, le gallium, le bore, le titane, le vanadium, le zirconium, le molybdène, l'arsenic, l'antimoine, le chrome et le manganèse, en présence d'au moins deux précurseurs d'un dérivé alkylé de polyméthylène α-ω diammonium jouant le rôle de structurant. Le mélange est généralement maintenu à une certaine température jusqu'à la cristallisation de la zéolithe. L'invention est caractérisée en ce qu'on utilise comme premier précurseur du dérivé alkylé de polyméthylène α-ω diammonium les monoamines.

Le dérivé alkylé de polyméthylène α-ω diammonium jouant le rôle de structurant a la formule suivante :

R₁R₂R₃N⁺ (CH₂)ₙ N⁺ R₄R₅R₆

n étant compris entre 3 et 14 et R₁ à R₆, identiques ou différents, pouvant représenter des radicaux alkyles ou hydroxyalkyles ayant de 1 à 8 atomes de carbone, jusqu'à cinq radicaux R₁ à R₆ pouvant être de l'hydrogène.

En plus du (des) précurseur(s) du structurant choisi(s) parmi les monoamines selon le procédé de la présente invention, le(s) autre(s) groupement(s) du structurant est (sont) introduit(s) à l'aide d'un deuxième précurseur approprié pour obtenir un ammonium quaternaire. Ces précurseurs, du type F-R-F', où F et F' sont des groupements partants identiques ou différents du type alcool ou halogénure, sont choisis selon l'invention parmi les alcanediols et les dihalogénures d'alcane.

Les précurseurs peuvent être préchauffés ensemble dans le récipient de réaction ou peuvent être mélangés tels quels avec les autres réactifs. Les précurseurs peuvent être introduits à n'importe quel moment de la préparation de la zéolithe.

De préférence, on introduit les précurseurs du structurant en solution avant l'addition des autres réactifs nécessaires pour la synthèse de la zéolithe.

Dans une mise en oeuvre particulière, il peut être avantageux d'ajouter au milieu réactionnel des germes S d'au moins une zéolithe. On peut ajouter des germes ayant le type structural de la zéolithe MTT ou le type structural d'autres zéolithes accessibles et peu onéreuses comme par exemple les zéolithes de type structural LTA, FAU, MOR, MFI. Ces germes peuvent accélérer la cristallisation de la zéolithe MTT à partir du mélange réactionnel. Les germes peuvent être introduits à tout moment de la synthèse de la zéolithe. De préférence, dans le cas éventuel où la zéolithe MTT est synthétisée à l'aide de germes, lesdits germes sont ajoutés après homogénéisation au moins en partie du mélange contenant les autres réactifs.

Dans une autre mise en oeuvre particulière, indépendante ou non de la mise en oeuvre précédente, il peut être avantageux d'ajouter au milieu réactionnel au moins un sel P de métal alcalin ou d'ammonium. On peut citer par exemple des radicaux acides forts tels que du bromure, du chlorure, de l'iodure, du sulfate, du phosphate ou du nitrate, ou des radicaux acides faibles tels que les radicaux acides organiques, par exemple du citrate ou de l'acétate. Ce sel peut accélérer la cristallisation des zéolithes MTT à partir du mélange réactionnel.

Le mélange aqueux réactionnel a généralement la composition molaire suivante, exprimée sous la forme d'oxyde :

| | |
|---|---|
| XO₂/T₂O₃ (mol/mol) | au moins 10 |
| OH⁻/XO₂ (mol/mol) | 0,002 à 2,0 |
| Q/XO₂ (mol/mol) | 0,002 à 2,0 |
| Q/(M⁺ + Q) (mol/mol) | 0,1 à 1,0 |
| H₂O/XO₂ (mol/mol) | 1 à 500 |
| P/XO₂ (mol/mol) | 0 à 5 |
| S/XO₂(g/g) | 0 à 0,1 |

de manière préférée, le mélange réactionnel a la composition suivante, exprimée sous forme d'oxydes

| | |
|---|---|
| XO₂/T₂O₃ (mol/mol) | au moins 12 |
| OH⁻/XO₂ (mol/mol) | 0,005 à 1,5 |
| Q/XO₂ (mol/mol) | 0,005 à 1,5 |
| Q/(M⁺ + Q) (mol/mol) | 0,1 à 1,0 |
| H₂O/XO₂ (mol/mol) | 3 à 250 |
| P/XO₂ (mol/mol) | 0 à 1 |
| S/XO₂ (g/g) | 0 à 0,07 |

et, de manière encore plus préférée, le mélange réactionnel a la composition suivante, exprimée sous forme d'oxydes :

| | |
|---|---|
| XO₂/T₂O₃(mol/mol) | au moins 15 |
| OH⁻/XO₂ (mol/mol) | 0,01 à 1 |
| Q/XO₂ (mol/mol) | 0,01 à 1 |
| Q/(M⁺ + Q) (mol/mol) | 0,1 à 1,0 |
| H₂O/XO₂ (mol/mol) | 5 à 100 |
| P/XO₂ (mol/mol) | 0 à 0,25 |
| S/XO₂ (g/g) | 0 à 0,04 |

où
X est le silicium et/ou le germanium,
T est au moins un élément choisi parmi l'aluminium, le fer, le gallium, le bore, le titane, le vanadium, le zirconium, le molybdène, l'arsenic, l'antimoine, le chrome et le manganèse
M⁺ représente un métal alcalin ou l'ion ammonium,
Q représente le dérivé alkylé précité de polyméthylène α-ω diammonium, introduit à l'aide des précurseurs appropriés correspondants, contenant une monoamine,
S représente les germes de zéolithe exprimés sous la forme séchée, calcinée ou échangée,
P représente le sel de métal alcalin ou d'ammonium.

M et/ou Q peuvent être présents sous forme d'hydroxydes ou de sels d'acides inorganiques ou organiques à la condition que le critère OH⁻ / XO₂ soit satisfait.

L'invention est caractérisée en ce que le structurant organique comprenant un dérivé alkylé de polyméthylène α-ω diammonium est introduit à l'aide d'au moins un premier précurseur choisi parmi les monoamines. On entend par monoamine tout composé organique ayant une fonction amine. De manière préférée ces précurseurs sont choisis parmi les alkylamines ayant de 1 à 18 atomes de carbone par molécule, et de préférence ayant de 1 à 8 atomes de carbone par molécule. Les alkylamines peuvent être primaires, secondaires ou tertiaires. Plus particulièrement ces précurseurs sont choisis parmi les trialkylamines.

Les précurseurs préférés de départ sont, entre autres, ceux qui conduisent aux dérivés alkylés de polyméthylène α-ω diammonium préférés, préférentiellement aux dérivés alkylés d'heptaméthylènediammonium, d'octaméthylènediammonium, d'undécaméthylènediammonium ou de dodécaméthylènediammonium et spécialement les dérivés méthylés d'heptaméthylènediammonium, d'octaméthylènediammonium, d'undécaméthylènediammonium ou de dodécaméthylènediammonium et encore plus préférentiellement les sels de 1,7-N,N,N,N',N',N'-hexaméthylhexaméthylènediammonium, de 1,8-N,N,N,N',N',N'-hexaméthyloctaméthylènediammonium, de 1,11-N,N,N,N',N',N'-hexaméthylundécaméthylènediammonium de 1,12-N,N,N,N',N',N'-hexaméthyldodécaméthylènediammonium ayant la formule (CH₃)₃ N⁺ (CH₂)ₙ N⁺ (CH₃)₃, n= 7,8, 11 ou 12, par exemple l'halogénure, l'hydroxyde, le sulfate, le silicate, l'aluminate. Par exemple, de manière préférée, le premier précurseur selon l'invention choisi parmi les monoamines est la triméthylamine et le second précurseur est le dibromoheptane, le dibromooctane, le dibromoundécane et le dibromododécane.

Le métal alcalin (M⁺) préféré est le sodium. L'élément T préféré est l'aluminium L'élément X préféré est le silicium.

La source de silicium peut être l'une quelconque de celles dont l'utilisation est normalement envisagée pour la synthèse des zéolithes, par exemple la silice solide en poudre, l'acide silicique, la silice colloïdale ou la silice en solution. Parmi les silices en poudre utilisables, il convient de citer les silices précipitées, spécialement celles obtenues par précipitation à partir d'une solution d'un silicate de métal alcalin, comme les Zeosil ou Tixosil, produites par Rhône-Poulenc, les silices pyrogénées telles que les aerosil produites par Degussa et les Cabosil produites par Cabot et les gels de silice. Des silices colloïdaies de diverses granulométries peuvent être utilisées, comme celles vendues sous les marques déposées « LUDOX » de Dupont, et « SYTON » de Monsanto.

Les silices dissoutes utilisables sont notamment les verres solubles ou silicates commercialisés contenant: 0,5 à 6,0 et spécialement 2,0 à 4,0 moles de SiO₂ par mole d'oxyde de métal alcalin et les silicates obtenues par dissolution de silice dans un hydroxyde de métal alcalin, un hydroxyde d'ammonium quaternaire ou un mélange de ceux-ci.

La source d'aluminium est le plus avantageusement l'aluminate de sodium, mais peut être l'aluminium, un sel d'aluminium, par exemple le chlorure, le nitrate ou le sulfate, un alcoolate d'aluminium ou l'alumine elle-même qui devrait de préférence se trouver sous une forme hydratée ou hydratable comme l'alumine colloïdale, la pseudoboehmite, la boehmite, l'alumine gamma, ou les trihydrates.

On peut utiliser des mélanges des sources citées ci-dessus. Des sources combinées de silicium et d'aluminium peuvent aussi être mises en oeuvre telles que les silice-alumines amorphes ou certaines argiles.

Le mélange de réaction est habituellement mis à réagir sous la pression autogène, éventuellement avec apport d'un gaz, par exemple d'azote, à une température comprise entre 85 et 250°C jusqu'à ce qu'il se forme des cristaux de la zéolithe, ce qui peut durer de 1 minute à plusieurs mois suivant la composition des réactifs, le mode de chauffage et de mélange, la température de travail et l'agitation. L'agitation est facultative, mais préférable, parce qu'elle abrège la durée de réaction.

Au terme de la réaction, la phase solide est collectée sur un filtre et lavée et est alors prête pour les opérations suivantes comme le séchage, la calcination et l'échange d'ions.

Ainsi, afin d'obtenir la forme hydrogène de la zéolithe MTT, on peut effectuer un échange d'ions avec un acide, spécialement un acide minéral fort comme l'acide chlorhydrique, sulfurique ou nitrique, ou avec un composé d'ammonium tel que le chlorure, le sulfate ou le nitrate d'ammonium. L'échange d'ions peut être effectué par dilution en une ou plusieurs fois avec la solution d'échange d'ions. La zéolithe MTT peut être calcinée avant ou après l'échange d'ions ou entre deux étapes d'échange d'ions, de préférence avant l'échange d'ions afin d'éliminer toute substance organique incluse, dans la mesure où l'échange d'ions s'en trouve facilité.

En règle générale, le ou les cations de la zéolithe MTT, peuvent être remplacés par un ou des cations quelconques de métaux et en particulier ceux des groupes IA, IB, IIA, IIB, IIIA et IIIB (y compris les terres rares) VIII (y compris les métaux nobles) de même que par le plomb, l'étain et le bismuth (Le tableau périodique est tel que dans "Handbook of Physic and Chemistry", 76ième édition). L'échange est exécuté au moyen de sels hydrosolubles quelconques contenant le cation approprié.

La présente invention concerne également l'utilisation de la zéolithe MTT telle que préparée selon le procédé de la présente invention comme adsorbant pour le contrôle de la pollution, comme tamis moléculaire pour la séparation et comme solide acide pour la catalyse dans les domaines du raffinage et de la pétrochimie.

Par exemple, lorsqu'elle est utilisée comme catalyseur, la zéolithe MTT synthétisée selon le procédé de la présente invention peut être associée à une matrice inorganique qui peut être inerte ou catalytiquement active et à une phase active. La matrice inorganique peut être présente simplement comme liant pour maintenir ensemble les petites particules de la zéolithe sous les différentes formes connues des catalyseurs (extrudés, billes, poudres), ou bien peut être ajoutée comme diluant pour imposer le degré de conversion dans un procédé qui progresserait sinon à une allure trop rapide conduisant à un encrassement du catalyseur en conséquence d'une formation exagérée de coke. Des diluants inorganiques typiques sont notamment des matières de support pour les catalyseurs comme la silice, les différentes formes d'alumine et les argiles kaoliniques, les bentonites, les montmorillonites, la sépiolite, l'attapulgite, la terre à foulon, les matières poreuses synthétiques comme SiO₂ -Al₂O₃, SiO₂-ZrO₂, SiO₂-ThO₂, SiO₂-BeO, SiO₂-TiO₂ ou toute combinaison de ces composés.

La zéolithe de type structural MTT peut aussi être associée à au moins une autre zéolithe et jouer le rôle de phase active principale ou d'additif.

La matrice inorganique peut être un mélange de différents composés, en particulier d'une phase inerte et d'une phase inorganique.

La phase métallique est introduite sur la zéolithe seule, la matrice inorganique seule ou l'ensemble matrice inorganique-zéolithe. par échange d'ions ou imprégnation avec des cations ou oxydes choisis parmi les suivants, Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.

Les compositions catalytiques comportant la zéolithe de type structural MTT peuvent trouver leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage et d'hydrocraquage, d'hydrogénation et de déshydrogénation, de reformage, d'oxydation, d'halogénation, de synthèses d'amines, d'hydrodésulfuration et d'hydrodénitrification, d'élimination catalytique des oxydes d'azote, de formation d'éther et de conversion d'hydrocarbures et de synthèse de composés organiques en général, lesdites réactions comprenant des hydrocarbures aliphatiques saturés et insaturés, des hydrocarbures aromatiques, des composés organiques oxygénés et des composés organiques contenant de l'azote et/ou du soufre, ainsi que des composés organiques contenant d'autres groupes fonctionnels. L'invention concerne tout particulièrement l'utilisation de la zéolithe MTT dans un catalyseur d'isomérisation des paraffines linéaires ayant de 4 à 8 atomes de carbone.

L'isomérisation (l'hydro-isomérisation) des paraffines linéaires ayant de 4 à 8 atomes de carbone par molécule peut être réalisée avec des catalyseurs bifonctionnels, associant une fonction acide et une fonction hydro-déshydrogénante.

Le catalyseur selon l'invention comprenant au moins une zéolithe de type structural MTT, peut-être utilisé dans tout procédé d'isomérisation (ou d'hydro-isomérisation) de paraffines C₅-C₁₀ de préférence C₇-C₁₀, de manière très préférée C₇-C₉ et de manière encore plus préférée C₇-C₈, le catalyseur selon l'invention est particulièrement adapté pour être utilisé dans un procédé de préparation d'essences à haut indice d'octane, associant une isomérisation catalytique et une séparation. Il est plus particulièrement bien adapté au procédé décrit dans la demande de brevet FR 97/14 891, qui comprend une section isomérisation et au moins une section permettant la séparation des paraffines dibranchées et tribranchées.

Le catalyseur à base de zéolithe MTT selon l'invention contient au moins une matrice à une teneur comprise entre 1 et 90 %, de préférence entre 5 et 90 % et de manière encore plus préférée entre 10 et 85 %.

Les matrices utilisée pour réaliser la mise en forme du catalyseur sont à titre d'exemples et de façon non limitative, les gels d'alumine, les alumines, la magnésie, les silice-alumines amorphes, et leurs mélanges. Des techniques telles que l'extrusion, le pastillage ou la dragéification, peuvent être utilisées pour réaliser l'opération de mise en forme.

Le catalyseur comporte aussi une fonction hydro-déshydrogénante assurée, par exemple, par au moins un élément du groupe VIII et de préférence au moins un élément compris dans l'ensemble formé par le platine et le palladium. La teneur pondérale en métal non noble du groupe VIII, par rapport au catalyseur final, est comprise entre 1 et 40 % de préférence entre 10 et 30 %. Dans ce cas, le métal non noble est souvent associé à au moins un métal du groupe VIB (Mo et W préférés). S'il s'agit d'au moins un métal noble du groupe VIII, la teneur pondérale, par rapport au catalyseur final, est inférieure à 5 %, de préférence inférieure à 3 % et de manière encore plus préférée inférieure à 1,5 %.

Dans le cas de l'utilisation de métaux nobles du groupe VIII, le platine et/ou le palladium sont de préférence localisés sur la matrice, définie comme ci-dessus.

L'isomérisation (l'hydro-isomérisation) est effectuée dans au moins un réacteur. La température est comprise entre 150 et 350°C, de préférence entre 200 et 300°C, et la pression partielle d'hydrogène est comprise entre 0,1 et 7 MPa, de préférence entre 0,5 et 5 MPa. La vitesse spatiale est comprise entre 0,2 et 10 litres d'hydrocarbures liquides par litre de catalyseur et par heure, de préférence entre 0,5 et 5 litres d'hydrocarbures liquides par litre de catalyseur et par heure. Le rapport molaire hydrogène/charge à l'entrée du réacteur est tel que le rapport molaire hydrogène/charge dans l'effluent sortant du réacteur est généralement supérieur à 0,01, de préférence compris entre 0,01 et 50, de manière plus préférée compris entre 0,06 et 20.

L'invention est illustrée par les exemples suivants.

### EXEMPLES 1 à 4: (comparatif)

Synthèse de zéolithe ZSM-23 de rapport Si/AI variable, supérieur à 18 avec le bromure d'octaméthonium (bromure de 1,8 hexa méthyloctaméthylènediammonium) comme structurant organique

Le mélange de synthèse a la composition molaire suivante:

| **Exemple** | **1** **Si/Al=20** | **2** **Si/Al=20** | **3** **Si/Al=20** | **4** **Si/Al=100** |
|---|---|---|---|---|
| SiO₂ (mol) | 60 | 60 | 60 | 60 |
| Al₂O₃ (mol) | 1,5 | 1,5 | 1,5 | 0,3 |
| Na₂O (mol) | 9 | 9 | 9 | 5 |
| OctaBr₂ (mol) | 10 | 10 | 10 | 10 |
| H₂O (mol) | 3000 | 3000 | 3000 | 3000 |
| ZSM-23/SiO₂ (g/g) | 0 | 0,04 | 0 | 0 |

| | | | | |
|---|---|---|---|---|
| OctaBr₂ = bromure d'octaméthonium = Me₃ N (CH₂)₈ N Me₃²⁺ (Br⁻)₂ | | | | |

On prépare la solution A composée de silicium et de structurant en diluant le bromure d'octaméthonium dans 80 % de l'eau nécessaire à la formation du gel puis en ajoutant le sol de silice colloïdal (Ludox HS40, Dupont, 40 % SiO₂). On dissout ensuite l'hydroxyde de sodium solide (Prolabo, 99 %) et l'aluminate de sodium solide (Prolabo, 46 % Al₂O₃, 33 % Na₂O) dans 10 % de l'eau nécessaire à la formation du gel pour former la solution B. On ajoute la solution B dans la solution A sous agitation puis le restant d'eau (10 %). On mélange jusqu'à homogénéisation et on ajoute les germes de zéolithe MTT séchée. On fait réagir le mélange résultant dans un autoclave de 125 ml sous agitation à 180°C sous la pression autogène, jusqu'à cristallisation de la zéolithe. Après refroidissement, on filtre le produit et on le lave avec 0,5 litre d'eau déminéralisée puis on le sèche en étuve ventilée à 120°C.

Les résultats de diffraction des rayons X et d'analyse chimique des solides récupérés sont reportés dans le tableau suivant, avec les conditions de cristallisation.

| **Exemple** | **1** **Si/Al=20** | **2** **Si/Al=20** | **3** **Si/Al=20** | **4** **Si/Al=100** |
|---|---|---|---|---|
| **Température (°C)** | 180 | 180 | 180 | 180 |
| **Temps (jours)** | 10,1 | 8,2 | 11,8 | 8,4 |
| **ZSM-23 (%,DRX)** | 100 | 98 | 85 (+15 % Q) | 102 |
| **Si/AI (mol/mol,FX)** | 18,5 | 19,2 | nd | 97 |
| **Rendement (%)** | 4,9 | 4,7 | 4,8 | 4,8 |

| | | | | |
|---|---|---|---|---|
| Q :quartz | | | | |
| DRX: diffraction des rayons X avec comme référence l'exemple 1 | | | | |
| FX: fluorescence X | | | | |

Les synthèses des exemples 1 et 4 réalisées à 180°C avec le structurant de l'art antérieur, sans germes, conduisent à la zéolithe ZSM-23 pure (cristallinité de 100 % ± 3) de rapport Si/Al variable, supérieur à 18, de rendement maximal (environ 5 %). L'exemple 2 correspond à une préparation avec germes et entraine un temps de cristallisation plus court par comparaison avec l'exemple 1 pour produire la zéolithe MTT (8,2 j contre 10,1 j). L'exemple 4 donne majoritairement la zéolithe ZSM-23 avec un peu de quartz du fait d'une durée de cristallisation trop longue par comparaison avec l'exemple 1 (11,8 j contre 10,1 j).

### EXEMPLES 5 à 8 : (invention)

Synthèse de zéolithe ZSM-23 de rapport Si/AI variable, supérieur à 18 avec les précurseurs du bromure d'octaméthonium (bromure de 1,8 hexaméthyloctaméthylènediammonium) comme structurant organique contenant une monoamine (triméthylamine)

Les mélanges de synthèse ont la composition molaire suivante :

| **Exemple** | **5** **Si/AI=20** | **6** **Si/Al=20** | **7** **Si/Al=20** | **8** **Si/Al=100** |
|---|---|---|---|---|
| SiO₂ (mol) | 60 | 60 | 60 | 60 |
| Al₂O₃ (mol) | 1,5 | 1,5 | 1,5 | 0,3 |
| Na₂O (mol) | 9 | 9 | 9 | 5 |
| DBrO(mol) | 10 | 10 | 10 | 10 |
| TMA (mol) | 20 | 20 | 20 | 20 |
| H₂O (mol) | 3000 | 3000 | 3000 | 3000 |
| ZSM-23/SiO₂ (g/g) | 0 | 0,04 | 0 | 0 |

| | | | | |
|---|---|---|---|---|
| DBrO = dibromooctane | | | | |
| TMA = triméthylamine | | | | |

La préparation est la même que celle décrite dans les exemples 1 à 4 avec en outre le mélange des deux précurseurs au départ, la solution aqueuse de triméthylamine (Acros, 45 %) et le dibromooctane (Acros, 98 %), dans les 80 % d'eau nécessaire à la formation du gel.

Les résultats de diffraction des rayons X et d'analyse chimique des solides récupérés sont reportés dans le tableau suivant avec les conditions de cristallisation.

| **Exemple** | **5** **Si/AI=20** | **6** **SilAl=20** | **7** **Si/Al=20** | **8** **Si/Al=100** |
|---|---|---|---|---|
| **Température (°C)** | 180 | 180 | 180 | 180 |
| **Temps (jours)** | 9,4 | 7,9 | 11,2 | 7,2 |
| **ZSM-23 (%,DRX)** | 99 | 101 | 80 (+20 % Q) | 100 |
| **Si/AI (mol/mol,FX)** | 18,9 | 17,8 | nd | 95 |
| **Rendement (%)** | 4,7 | 4,9 | 4,6 | 4,9 |

| | | | | |
|---|---|---|---|---|
| Q :quartz | | | | |
| DRX: diffraction des rayons X avec comme référence l'exemple 1 | | | | |
| FX: fluorescence X | | | | |

Les synthèses des exemples 5 et 8 réalisées à 180°C avec les précurseurs spécifiques du structurant selon l'invention, sans germes, conduisent à la zéolithe MTT pure (cristallinité de 100 % ± 3) de rapport Si/AI variable, supérieur à 18, de rendement maximal (environ 5 %). L'exemple 6 correspond à une préparation avec germes et entraine un temps de cristallisation plus court par comparaison avec l'exemple 5 pour produire la zéolithe ZSM-23 (7,9 j contre 9,4 j). L'exemple 7 donne majoritairement la zéolithe MTT avec un peu de quartz du fait d'une durée de cristallisation plus longue par comparaison avec l'exemple 5 (11,2 j contre 9,4 j).

### EXEMPLES 9 et 10 : (comparatif)

Synthèse de zéolithe ZSM-23 de rapport Si/AI variable, supérieur à 18 avec le bromure de dodécaméthonium (bromure de 1,12 hexaméthyldodécaméthylènediammonium) comme structurant organique.

Le mélange de synthèse a la composition molaire suivante :

| **Exemple** | **9** **Si/AI=20** | **10** **Si/Al=100** |
|---|---|---|
| SiO₂ (mol) | 60 | 60 |
| Al₂O₃ (mol) | 1,5 | 0,3 |
| Na₂O (mol) | 9 | 5 |
| DodecaBr₂ (mol) | 10 | 10 |
| H₂O (mol) | 3000 | 3000 |

| | | |
|---|---|---|
| DodecaBr₂ = bromure de dodécaméthonium = Me₃ N (CH₂)₁₂ N Me₃²⁺ (Br⁻)₂ | | |

On prépare la solution A composée de silicium et de structurant en diluant le bromure de dodécaméthonium dans 80 % de l'eau nécessaire à la formation du gel puis en ajoutant le sol de silice colloïdal (Ludox HS40, Dupont, 40 % SiO₂). On dissout ensuite l'hydroxyde de sodium solide (Prolabo, 99 %) et l'aluminate de sodium solide (Prolabo, 46 % Al₂O₃, 33 % Na₂O) dans 10 % de l'eau nécessaire à la formation du gel pour former la solution B. On ajoute la solution B dans la solution A sous agitation puis le restant d'eau (10 %). On mélange jusqu'à homogénéisation et on ajoute les germes de zéolithe MTT séchée. On fait réagir le mélange résultant dans un autoclave de 125 ml sous agitation à 180°C sous la pression autogène, jusqu'à cristallisation de la zéolithe. Après refroidissement, on filtre le produit et on le lave avec 0,5 litre d'eau déminéralisée puis on le sèche en étuve ventilée à 120°C.

Les résultats de diffraction des rayons X et d'analyse chimique des solides récupérés sont reportés dans le tableau suivant, avec les conditions de cristallisation.

| **Exemple** | **9** **Si/Al=20** | **10** **Si/Al=100** |
|---|---|---|
| **Température (°C)** | 180 | 180 |
| **Temps (h)** | 11,2 | 8,5 |
| **ZSM-23 (%,DRX)** | 98 | 99 |
| **Si/AI (mol/mol,FX)** | 17,6 | 96 |
| **Rendement (%)** | 4,7 | 4,9 |

| | | |
|---|---|---|
| DRX: diffraction des rayons X avec comme référence l'exemple 1 | | |
| FX: fluorescence X | | |

Les synthèses des exemples 9 et 10 réalisées à 180°C avec le structurant de l'art antérieur, sans germes, conduisent à la zéolithe MTT pure (cristallinité de 100 % ± 3) de rapport Si/AI variable, supérieur à 18, de rendement maximal (environ 5 %).

### EXEMPLES 11 et 12 : (invention)

Synthèse de zéolithe ZSM-23 de rapport Si/AI variable, supérieur à 18 avec les précurseurs du bromure de dodécaméthonium (bromure de 1,12 hexaméthyldodécaméthylènediammonium) comme structurant organique contenant une monoamine (triméthylamine).

Les mélanges de synthèse ont la composition molaire suivante :

| **Exemple** | **11** **Si/Al=20** | **12** **Si/Al=100** |
|---|---|---|
| SiO₂ (mol) | 60 | 60 |
| Al₂O₃ (mol) | 1,5 | 0,3 |
| Na₂O (mol) | 9 | 5 |
| DBrO (mol) | 10 | 10 |
| TMA (mol) | 20 | 20 |
| H₂O (mol) | 3000 | 3000 |

| | | |
|---|---|---|
| DBrD = dibromododécane | | |
| TMA = triméthylamine | | |

La préparation est la même que celle décrite dans les exemples 9 et 10 avec en outre le mélange des deux précurseurs au départ, la solution aqueuse de triméthylamine (Acros, 45 %) et le dibromododécane (Acros, 96 %), dans les 80 % d'eau nécessaire à la formation du gel.

Les résultats de diffraction des rayons X et d'analyse chimique sont reportés dans le tableau suivant avec les conditions de cristallisation.

| **Exemple** | **11** **Si/Al=20** | **12** **Si/Al=100** |
|---|---|---|
| **température (°C)** | 180 | 180 |
| **temps (h)** | 9,8 | 7,4 |
| **ZSM-23 (%,DRX)** | 101 | 103 |
| **Si/AI (mol/mol,FX)** | 17,6 | 17,8 |
| **rendement (%)** | 4,9 | 4,7 |

| | | |
|---|---|---|
| DRX: diffraction des rayons X avec comme référence l'exemple 1 | | |
| FX: fluorescence X | | |

Les synthèses des exemples 11 et 12 réalisées à 180°C avec les précurseurs spécifiques du structurant selon l'invention, avec des germes, conduisent à la zéolithe MTT pure (cristallinité de 100 % ± 3) de rapport Si/AI variable, supérieur à 18, de rendement maximal (environ 5 %).

### Bilan des synthèses de zéolithe ZSM-23:

Les données des tableaux ci-dessus montrent que les zéolithes MTT synthétisées à l'aide de précurseurs spécifiques du structurant organique contenant une monoamine sont cristallisées en un temps plus court que les zéolithes ZSM-23 synthétisées par une méthode selon l'art antérieur, ce qui permet un gain de coût. De plus, lors de la mise en oeuvre de l'ajout de germes de zéolithe lors de la préparation, on améliore encore les performances en terme de temps de cristallisation.

### Exemples complémentaires

### Exemple 13 : Préparation de la zéolithe ZSM-23 de type structural MTT

La zéolithe ZSM-23 est préparée selon l'exemple 6. Le solide ainsi synthétisé est soumis à une calcination sous air sec durant 12 h à 550°C, puis à trois échanges ioniques successifs par une solution de nitrate d'ammonium, de manière à obtenir la forme NH₄⁺ de la zéolithe.

Pour cela, 10 grammes de la zéolithe ZSM-23, issue de l'exemple 6, sont mis en suspension dans 100 ml d'une solution molaire de nitrate d'ammonium (5M), puis agités sous reflux durant 2 heures. Le solide est ensuite filtré, lavé. Ce cycle de traitement est reproduit encore deux fois supplémentaires. Le solide obtenu est ensuite séché à 60°C durant 10 heures.

La zéolithe ZSM-23 après ce traitement possède un rapport Si/AI=18,3 et une teneur en Na de l'ordre de 23 ppm poids

### Exemple 14 : Préparation du catalyseur C1 (conforme à l'invention)

La zéolithe préparée dans l'exemple 9 est malaxée avec un gel d'alumine. La pâte malaxée est ensuite extrudée à travers une filière de diamètre 1,4 mm. La teneur en zéolithe ZSM-23 de type structural MTT dans le support (zéolithe + matrice) est de 70% poids.

Un dépôt de platine en utilisant une solution du sel de platine H₂PtCl₆ est réalisée de telle manière à obtenir une teneur en platine sur le support de 0,4 % poids. Le catalyseur ainsi obtenu est dénommé C1. La dispersion du platine mesurée par titrage H₂/O₂ après calcination à 450°C, sous air sec, et réduction sous hydrogène à 420°C, est d'environ 87%.

### Exemple 15: Evaluation catalytique du catalyseur C1 en hydro-isomérisation du n-heptane

Préalablement à son évaluation catalytique le catalyseur C1 est soumis à une calcination à 450°C sous air sec durant 4 heures. La montée en température est réalisée à une vitesse de 5°C/minute et deux paliers d'une heure chacun sont respectés à 150°C et 300°C.

La réduction de la phase métallique est réalisée in situ dans le réacteur catalytique juste avant la réalisation du test.

Les conditions de réduction pour les trois catalyseurs, sont les suivantes :
- montée en température à 7°C/minute jusqu'à 150°C sous flux d'hydrogène, palier de 30 minutes,
- puis de nouveau montée en température à 7°C/minute jusqu'à 300°C sous flux d'hydrogène, palier de 30 minutes,
- puis finalement montée en température à 7°C/minute jusqu'à 450°C sous flux d'hydrogène, palier de 60 minutes.

La température est ensuite diminuée jusqu'à la valeur de la température de réaction qui est de 230°C. Les tests catalytiques sont réalisés dans un réacteur à lit fixe en phase gazeuse. La molécule isomérisée (hydro-isomérisée) en présence d'hydrogène est le n-heptane (de pureté 99,9%), et le rapport molaire hydrogène sur n-heptane, utilisée dans les divers tests catalytiques, est de 2. La vitesse spatiale, c'est à dire la masse de n-heptane injecté par gramme de catalyseur et par heure est de 1,2 h-1.

Les produits formés sont soit des produits de craquage C₁ à C₆, soit des produits à 7 atomes de carbone par molécule, isomères du n-heptane, ou bien encore des produits aromatiques provenant des réactions d'aromatisation du n-heptane.

Les résultats catalytiques obtenus sont regroupés dans le tableau ci-après :

| **% poids** | **Catalyseur C1 contenant la zéolithe ZSM-23 conforme à l'invention** |
|---|---|
| Conversion n-C₇ | 88 |
| Rendement en produits de C₁-C₆ - Craquage | 22 |
| Rendement Isomérisation | 66 |

Ce tableau met en évidence que l'utilisation d'un catalyseur comprenant une zéolithe ZSM-23 selon l'invention (catalyseur C1) permet un de réaliser l'hydroisomérisation du n-heptane.

## Revendications

1. Procédé de synthèse d'un matériau zéolithique de type structural MTT comprenant au moins un élément X choisi parmi le silicium et le germanium et au moins un élément T choisi parmi l'aluminium, le fer, le gallium, le bore, le titane, le vanadium, le zirconium, le molybdène, l'arsenic, l'antimoine, le chrome et le manganèse, comprenant le mélange en milieu aqueux d'au moins une source d'au moins un élément X, d'au moins une source d'au moins un élément T, et d'au moins deux précurseurs d'un structurant comprenant un dérivé alkylé de polyméthylène α-ω diammonium, l'un des précurseurs étant choisi parmi les monoamines et l'autre précurseur étant choisi parmi les dihalogénures d'alcane et les alcanediols.

2. Procédé selon la revendication 1 tel que le dérivé alkylé de polyméthylène α-ω diammonium a la formule suivante : R₁R₂R₃ N⁺ (CH₂)ₙ N⁺ R₄R₅R₆ n étant compris entre 3 et 14 et R₁ à R₆, identiques ou différents, pouvant représenter des radicaux alkyles ou hydroxyalkyles ayant de 1 à 8 atomes de carbone, jusqu'à cinq radicaux R₁ à R₆ pouvant être de l'hydrogène.

3. Procédé selon l'une des revendications 1 à 2 dans lequel le dérivé alkylé de polyméthylène α-ω diammonium est choisi parmi les dérivés alkylés d'heptaméthylènediammonium, d'octaméthylènediammonium, d'undécaméthylènediammonium et de dodécaméthylènediammonium.

4. Procédé selon l'une des revendications 1 à 3, dans lequel le dérivé alkylé de polyméthylène α-ω diammonium est choisi parmi les sels de
1,7-N,N,N,N',N',N'-hexaméthylheptaméthylènediammonium,
de 1,8-N,N,N,N',N',N'-hexaméthyloctaméthylènediammonium,
de 1,11-N,N,N,N',N',N'-hexaméthylundécaméthylènediammonium,
de 1,12-N,N,N,N',N',N'-hexaméthyldodécaméthylènediammonium

5. Procédé selon l'une des revendications 1 à 4, dans lequel le précurseur du dérivé alkylé de polyméthylène α-ω diammonium choisi parmi les monoamines est une trialkylamine.

6. Procédé selon l'une des revendications 1 à 5, dans lequel le précurseur choisi parmi les monoamines est la triméthylamine (TMA).

7. Procédé selon l'une des revendications 1 à 6 dans lequel le précurseur choisi parmi les dihalogénures d'alcane et les alcanediols est le dibromoheptane, le dibromooctane, le dibromoundécane, ou le dibromododécane.

8. Procédé selon l'une des revendications 1 à 7 dans lequel on ajoute au mélange réactionnel au moins un germe d'au moins une zéolithe.

9. Procédé selon l'une des revendications 1 à 8 dans lequel on ajoute au mélange au moins un sel P.

10. Procédé selon l'une des revendications 1 à 9 dans lequel le mélange réactionnel a la composition molaire suivante, exprimée sous forme d'oxydes :
| | |
|---|---|
| XO₂/T₂O₃ (mol/mol) | Au moins 10 |
| Q/XO₂ (mol/mol) | 0,002 à 2,0 |
| OH /XO₂ (mol/mol) | 0,002 à 2,0 |
| Q/(M⁺+Q) (mol/mol) | 0,1 à 1 |
| H₂O/XO₂ (mol/mol) | 1 à 500 |
| P/XO₂ (mol/mol) | 0 à 5 |
| S/XO₂ (g/g) | 0 à 0,1 |
où M⁺ représente un métal alcalin ou l'ammonium et Q représente le dérivé alkylé de polyméthylène α-ω diammonium, introduit à l'aide de précurseurs comprenant une monoamine.

11. Procédé selon l'une des revendications 1 à 10 dans lequel X est le silicium et T est l'aluminium.

12. Procédé selon l'une des revendications 1 à 11 dans lequel on introduit les précurseurs du dérivé alkylé de polyméthylène α-ω diammonium à n'importe quel moment de la synthèse.

13. Procédé selon l'une des revendications 1 à 12 dans lequel on introduit les précurseurs en solution avant l'addition de l'élément T et de l'élément X.

## Claims

1. A process for synthesising a zeolite material with structure type MTT comprising at least one element X selected from silicon and germanium and at least one element T selected from aluminium, iron, gallium, boron, titanium, vanadium, zirconium, molybdenum, arsenic, antimony, chromium and manganese, comprising mixing, in an aqueous medium, at least one source of at least one element X, at least one source of at least one element T and at least two precursors of a template comprising an alkylated polymethylene α-ω diammonium derivative, one of the precursors being selected from monoamines and the other precursor being selected from alkane dihalides and alkanediols.

2. A process according to claim 1, in which the alkylated α-ω diammonium polymethylene derivative has the following formula: R₁R₂R₃N⁺(CH₂)ₙN⁺R₄R₅R₆, where n is in the range 3 to 14 and R₁ to R₆, which may be identical or different, represent alkyl or hydroxyalkyl radicals containing 1 to 8 carbon atoms, up to five R₁ to R₆ radicals can be hydrogen.

3. A process according to claim 1 or claim 2, in which the alkylated α-ω diammonium polymethylene derivative is selected from alkylated derivatives of heptamethylenediammonium, octamethylenediammonium, undecamethylenediammonium and dodecamethylenediammonium.

4. A process according to any one of claims 1 to 3, in which the alkylated α-ω diammonium polymethylene derivative is selected from 1,7-N,N,N,N',N',N',-hexamethylheptamethylenediammonium salts, 1,8-N,N,N,N',N',N',-hexamethyloctamethylenediammonium salts, 1,11-N,N,N,N',N',N',-hexamethylundecamethylenediammonium salts and 1,12-N,N,N,N',N',N',-hexamethyldodecamethylenediammonium salts.

5. A process according to any one of claims 1 to 4, in which the alkylated α-ω diammonium polymethylene derivative precursor selected from monoamines is a trialkylamine.

6. A process according to any one of claims 1 to 5, in which the precursor selected from monoamines is trimethylamine (TMA).

7. A process according to any one of claims 1 to 6, in which the precursor selected from alkane dihalides and alkanediols dibromoheptane is dibromooctane, dibromoundecane and dibromododecane.

8. A process according to claims 1 to 7, in which at least one seed of at least one zeolite is added to the reaction mixture.

9. A process according to any one of claims 1 to 8, in which at least one salt P is added to the mixture.

10. A process according to any one of claims 1 to 9, in which the reaction mixture has the following molar composition, expressed in the oxide form:
| | |
|---|---|
| XO₂/T₂O₃ (mol/mol) | at least 10 |
| Q/XO₂ (mol/mol) | 0.002 to 2.0 |
| OH/XO₂ (mol/mol) | 0.002 to 2.0 |
| Q/(M⁺ + Q) (mol/mol) | 0.1 to 1 |
| H₂O/XO₂ (mol/mol) | 1 to 500 |
| P/XO₂ (mol/mol) | 0 to 5 |
| S/XO₂ (g/g) | 0 to 0.1 |
where M⁺ represents an alkali metal or an ammonium ion and Q represents the alkylated polymethylene α-ω diammonium derivative, introduced by means of precursors comprising a monoamine.

11. A process according to any one of claims 1 to 10, in which X is silicon and T is aluminium.

12. A process according to any one of claims 1 to 11, in which the alkylated polymethylene α-ω diammonium derivative precursors are introduced at any time during the synthesis.

13. A process according to any one of claims 1 to 12, in which the precursors are introduced in solution before adding element T and element X.

## Patentansprüche

1. Verfahren zur Synthese eines wenigstens ein Element X, das unter Silizium und Germanium gewählt ist und wenigstens ein Element T, das unter Aluminium, Eisen, Gallium, Bor, Titan, Vanadium, Zirkonium, Molybdän, Arsen, Antimon, Chrom und Mangan gewählt ist, umfassenden zeolithischen Materials vom Strukturtyp MTT, umfassend das Mischen in wässrigem Milieu von wenigstens einer Quelle von wenigstens einem Element X mit wenigstens einer Quelle von wenigstens einem Element T und wenigstens zwei Vorläufern eines Strukturbildners, der ein alkyliertes Derivat von α-ω-Diammoniumpolymethylen umfasst, wobei einer der Vorläufer unter den Monoaminen gewählt ist und der andere Vorläufer unter den Alkandihalogeniden und den Alkandiolen gewählt ist.

2. Verfahren nach Anspruch 1, derart, dass das alkylierte Derivat von α-ω-Diammoniumpolymethylen die folgende Formel hat: R₁R₂R₃N⁺(CH₂)ₙN⁺R₄R₅R₆, wobei n zwischen 3 und 14 liegt und R₁ bis R₆ identisch oder verschieden Alkyloder Hydroxyalkylreste mit 1 bis 8 Kohlenstoffatomen darstellen können und bis zu fünf Reste R₁ bis R₆ Wasserstoff seien können.

3. Verfahren nach einem der Ansprüche 1 bis 2, bei dem das alkylierte Derivat von α-ω-Diammoniumpolymethylen gewählt ist unter den alkylierten Derivaten von Diammoniumheptamethylen, Diammoniumoctamethylen, Diammoniumundecamethylen und Diammoniumdodecamethylen.

4. Verfahren nach einem der Ansprüche 1 bis 3, bei dem das alkylierte Derivat von α-ω-Diammoniumpolymethylen gewählt ist unter den Salzen
von 1,7-N,N,N,N',N',N'-Diammoniumhexamethylheptamethylen,
von 1,8-N,N,N,N',N',N'-Diammoniumhexamethyloctamethylen,
von 1,11-N,N,N,N',N',N'-Diammoniumhexamethylundecamethylen,
von 1,12-N,N,N,N',N',N'-Diammoniumhexamethyldodecamethylen

5. Verfahren nach einem der Ansprüche 1 bis 4, bei dem der Vorläufer des unter den Monoaminen gewählten alkylierten Derivats von α-ω-Diammoniumpolymethylen ein Trialkylamin ist.

6. Verfahren nach einem der Ansprüche 1 bis 5, bei dem der unter den Monoaminen gewählte Vorläufer Trimethylamin (TMA) ist.

7. Verfahren nach einem der Ansprüche 1 bis 6, bei dem der unter den Alkandihalogeniden und den Alkandiolen gewählte Vorläufer Dibromheptan, Dibromoctan, Dibromundecan oder Dibromdodecan ist.

8. Verfahren nach einem der Ansprüche 1 bis 7, bei dem man dem Reaktionsgemisch wenigstens einen Keim wenigstens eines Zeolithen zugibt.

9. Verfahren nach einem der Ansprüche 1 bis 8, bei dem man dem Reaktionsgemisch wenigstens ein Salz P zugibt.

10. Verfahren nach einem der Ansprüche 1 bis 9, bei dem das Reaktionsgemisch ausgedrückt in Oxidform die folgende molare Zusammensetzung hat:
| | |
|---|---|
| XO₂/T₂O₃ (mol/mol) | wenigstens 10 |
| Q/XO₂ (mol/mol) | 0,002 bis 2,0 |
| OH /XO₂ (mol/mol) | 0,002 bis 2,0 |
| Q/(M⁺ +Q) (mol/mol) | 0,1 bis 1 |
| H₂O/XO₂ (mol/mol) | 1 bis 500 |
| P/XO₂ (mol/mol) | 0 bis 5 |
| S/XO₂ (g/g) | 0 bis 0,1 |
wobei M⁺ ein Alkalimetall oder Ammonium darstellt und Q ein alkyliertes Derivat von α-ω-Diammoniumpolymethylen darstellt, das mit Hilfe von Vorläufern eingeführt ist, die ein Monoamin umfassen.

11. Verfahren nach einem der Ansprüche 1 bis 10, bei dem X Silizium und T Aluminium ist.

12. Verfahren nach einem der Ansprüche 1 bis 11, bei dem man die Vorläufer des alkylierten Derivats von α-ω-Diammoniumpolymethylen zu irgend einem Zeitpunkt der Synthese einführt.

13. Verfahren nach einem der Ansprüche 1 bis 12, bei dem man die Vorläufer in Lösung vor Zugabe des Elements T und des Elements X einführt.
